# EUROPÄISCHE PATENTSCHRIFT

(11) **EP 3 103 688 B1**
(45) Veröffentlichungstag und Bekanntmachung des Hinweises auf die Patenterteilung: **05.12.2018**
(21) Anmeldenummer: 15171280.9
(22) Anmeldetag: 09.06.2015
(51) Int. Cl.: B60R 16/027, F41A 27/28, F41H 5/20

(54) **VERFAHREN UND VORRICHTUNG ZUR SIGNALÜBERTRAGUNG ÜBER EINEN SCHLEIFRING EINES MILITÄRISCHEN FAHRZEUGS**
METHOD AND DEVICE FOR SIGNAL TRANSMISSION VIA A SLIP RING OF A MILITARY VEHICLE
PROCEDE ET DISPOSITIF DE TRANSMISSION DE SIGNAL AU MOYEN D'UNE BAGUE D'UN VEHICULE MILITAIRE

(43) Veröffentlichungstag der Anmeldung: 14.12.2016
(73) Patentinhaber: Krauss-Maffei Wegmann GmbH & Co. KG, 80997 München (DE)
(72) Erfinder: HOFMAN, Jürgen, 34127 Kassel (DE); ALBRECHT, Detlef, 34127 Kassel (DE)
(74) Vertreter: Feder Walter Ebert

(56) Entgegenhaltungen:
- EP-A1- 1 591 746
- WO-A1-2009/000380
- DE-A1- 2 228 847
- DE-A1-102013 101 632
- US-A1- 2012 024 143

## Beschreibung

Die Erfindung betrifft ein Verfahren zur Signalübertragung zwischen mindestens zwei Sender-/Empfänger-Einheiten in einem militärischen Fahrzeug über eine vorgegebene Anzahl Leiterbahnen eines Schleifrings, der zwischen einer Fahrzeugwanne und einem drehbar mit der Fahrzeugwanne verbundenen Turm angeordnet ist. Zudem betrifft die Erfindung ein militärisches Fahrzeug mit einer Wanne, einem Turm, zwei Sender-/Empfänger-Einheiten und einer entsprechenden Vorrichtung zur Signalübertragung.

Militärische Fahrzeuge weisen häufig eine Fahrzeugwanne auf, in der die Antriebs- und Steuerungsvorrichtungen des Fahrzeugs angeordnet sind. Auf dieser Fahrzeugwanne ist dabei meist ein drehbarer Turm angeordnet, der unter anderem die Hauptbewaffnung des Fahrzeugs aufweist, so dass die Waffe unabhängig von der Fahrtrichtung des Fahrzeugs gerichtet werden kann.

Zwischen Fahrzeugwanne und Turm ist zentrisch zur Drehbewegung des Turms ein sogenannter Schleifring angeordnet, über welchen zwischen den beiden gegeneinander verdrehbaren Fahrzeugelementen elektrische Signale übertragen werden können, z. B. zur Kommunikation zwischen Wanne und Turm. Der Schleifring weist dafür Leiterbahnen auf, die beabstandet zueinander an dem Schleifring angeordnet sind und auf welchen jeweils eine Schleifbürste gleiten kann. Dabei ist es üblich, dass die einzelnen Schleifbürsten mit dem drehbaren Turm und der Schleifring mit der Fahrzeugwanne verbunden sind. Bei einer Drehung des Turms, gleiten die Schleifbürsten über ihre entsprechenden Leiterbahnen, so dass eine Signalübertragung zwischen Fahrzeugwanne und Turm gewährleistet ist.

Die EP 1 591 746 A1 zeigt ein Kampffahrzeug mit einer Wanne und einem Turm, wobei koaxial zur Drehachse des Turms ein Schleifring zur Übertragung von elektrischen Signalen und elektrischer Energie zwischen Fahrzeugwanne und Turm angeordnet ist.

Militärische Fahrzeuge werden in der Regel für eine Laufzeit von mehreren Jahrzehnten eingesetzt. Denn es hat sich herausgestellt, dass es besonders in wirtschaftlicher Hinsicht vorteilhaft ist, bestehende Fahrzeuge bei Bedarf umzurüsten oder mit neuer Technik auszurüsten, anstatt gesamte Fahrzeuge neu zu konzipieren. Aus diesem Grund werden auch an die eingangs beschriebene Signalübertragung zwischen Fahrzeugwanne und Turm immer höhere Anforderungen gestellt. Denn oft werden Türme mit weiteren Waffen, Optiken, Sensoren oder sonstigen Geräten nachgerüstet und verbessert, so dass insgesamt eine Vielzahl von Signalen übertragen werden muss.

Die entsprechenden Schleifringe weisen nur eine bestimmte und vordefinierte Anzahl Leiterbahnen auf, die bei der Herstellung des Fahrzeugs vorgesehen werden und nur mit erheblichem Aufwand geändert bzw. erweitert werden können. Zudem werden neben der Signalübertragung auch Leiterbahnen zur Übertragung von elektrischer Energie benötigt, so dass sich insbesondere bei der Aufrüstung von Fahrzeugen mit am Turm angeordneten Geräten das Problem ergibt, dass zur Signalübertragung nicht genügend Leiterbahnen vorhanden sind.

Ausgehend davon stellt sich die Erfindung die **Aufgabe**, ein Verfahren anzugeben, mit welchem Signale zwischen einer Fahrzeugwanne und einem Turm über eine geringe Anzahl Leiterbahnen übertragen werden können.

Diese Aufgabe wird bei einem eingangs beschriebenen Verfahren mit den Merkmalen des Patentanspruchs 1 **gelöst** .

Erfindungsgemäß werden Signale von der ersten Sender-/Empfänger-Einheit über eine bestimmte Anzahl von ersten Zuleitern zu einer ersten Konvertierungseinheit zur Konvertierung der Signale geleitet, wobei die erste Konvertierungseinheit die Signale derart konvertiert, dass diese über eine bestimmte Anzahl von ersten Verbindungsleitern geleitet werden können, wobei die Anzahl der ersten Verbindungsleiter geringer ist als die Anzahl der ersten Zuleiter und wobei die Signale von der ersten Konvertierungseinheit über die ersten Verbindungsleiter zu den Leiterbahnen des Schleifrings geleitet werden.

Dadurch, dass die Anzahl an Verbindungsleitern geringer ist als die Anzahl an Zuleitern, werden für die Übertragung von Signalen zwischen Fahrzeugwanne und Turm insgesamt weniger Leiterbahnen des Schleifrings benötigt. Es ist beispielsweise möglich, dass die Anzahl der ersten Zuleiter größer ist als die Anzahl vorhandener Leiterbahnen des Schleifrings und/oder diese größer als die Anzahl der für die Signalübertragung zur Verfügung stehenden Leiterbahnen des Schleifrings ist. Daher kann es sein, dass die ersten Zuleiter nicht direkt mit den Leiterbahnen des Schleifrings verbunden werden können oder nicht alle Signale übertragen werden können. Die Anzahl an ersten Verbindungsleitern ist geringer als die Anzahl an ersten Zuleitern und geringer oder identisch mit der Anzahl der Leiterbahnen des Schleifrings oder mit der Anzahl der zur Signalübertragung zur Verfügung stehenden Leiterbahnen des Schleifrings. Die ersten Verbindungsleiter können demnach mit den Leiterbahnen des Schleifrings verbunden werden.

Die Signale von den Leiterbahnen des Schleifrings werden über eine bestimmte Anzahl von zweiten Verbindungsleitern zu einer zweiten Konvertierungseinheit geleitet, wobei die Anzahl der zweiten Verbindungsleiter und die Anzahl der ersten Verbindungsleiter insbesondere gleich ist. Es ist möglich, dass beide Konvertierungseinheiten die Signale auf gleiche Weise konvertieren können, so dass die Signale von der ersten Konvertierungseinheit konvertiert und von der zweiten Konvertierungseinheit auf entsprechende Weise zurückkonvertiert werden können. Es ist jedoch auch möglich, dass beide Konvertierungseinheiten die Signale sowohl konvertieren als auch zurückkonvertieren können. Die Konvertierungseinheiten können die Signale komprimieren, expandieren, zusammenfassen, falten, überlagern, polarisieren oder auf eine andere Art konvertieren oder zurückkonvertieren, so dass diese auch über eine geringere Anzahl an Leitern geleitet werden können. Die in den Signalen enthaltenen Informationen bleiben dabei insbesondere erhalten.

Die zweite Konvertierungseinheit konvertiert die Signale derart, dass diese über eine bestimmte Anzahl von zweiten Zuleitern leitbar sind, wobei die Anzahl der zweiten Zuleiter größer ist als die Anzahl der zweiten Verbindungsleiter. Die Signale in den zweiten Zuleitern können den Signalen in den ersten Zuleitern entsprechen, wobei die Signale jedoch auch unterschiedlich sein können. Die Signale können von den Konvertierungseinheiten derart konvertiert werden, dass die in den Signalen enthaltenen Informationen in den ersten Zuleitern und in den zweiten Zuleitern gleich sind. Die Signale können derart konvertiert und zurückkonvertiert werden, dass die an den ersten Zuleitern anliegende Spannung und die an den zweiten Zuleitern anliegende Spannung gleich sind.

Die Signale werden von der zweiten Konvertierungseinheit über die zweiten Zuleiter zu der zweiten Sender-/Empfänger-Einheit geleitet. Die Signale können an der zweiten Sender-/Empfänger-Einheit derart ankommen, wie sie bei der ersten Sender-/Empfänger-Einheit ausgesendet wurden. Die Signale können dementsprechend derart auf die zweite Sender-/Empfänger-Einheit wirken, als ob diese direkt mit der ersten Sender-/Empfänger-Einheit verbunden ist und die Signale nicht konvertiert würden. Die Signale können jedoch auch unterschiedlich sein, wobei die in den Signalen enthaltenen Informationen insbesondere erhalten bleiben.

Durch das erfindungsgemäße Verfahren können mehrere Signale über eine vorgegebene Anzahl an Leiterbahnen übertragen werden. Dadurch, dass durch die Konvertierungseinheiten neben der Kommunikation nun auch weitere Signale in die Übertragung integriert werden können, können auch auf einfache Weise zusätzliche Geräte nachgerüstet werden. Beispielsweise können diese Nachrüstgeräte mit dem entsprechenden Turmnetzwerk verbunden werden und dann auch mit dem Netzwerk der Fahrzeugwanne kommunizieren.

Zur **Lösung** der genannten Aufgabe wird zudem ein militärisches Fahrzeug mit den Merkmalen des Anspruchs 2 vorgeschlagen. Weitere vorteilhafte Ausgestaltungen sind Teil der abhängigen Ansprüche, wobei sich auch die bereits in Bezug auf das Verfahren erläuterten Vorteile ergeben.

Das Fahrzeug weist eine Vorrichtung auf, bei der die erste Sender-/Empfänger-Einheit über eine bestimmte Anzahl von ersten Zuleitern mit einer ersten Konvertierungseinheit zur Konvertierung der Signale verbunden ist, wobei mittels der ersten Konvertierungseinheit die Signale derart konvertierbar sind, dass diese über eine bestimmte Anzahl von ersten Verbindungsleitern leitbar sind, wobei die Anzahl von ersten Verbindungsleitern geringer ist als die Anzahl von ersten Zuleitern und wobei die erste Konvertierungseinheit über die ersten Verbindungsleiter mit den Leiterbahnen des Schleifrings verbunden ist.

Die erste Sender-/Empfänger-Einheit kann in der Fahrzeugwanne angeordnet sein und beispielsweise über eine Netzwerkverbindung mit einem Feuerleitrechner, mit Eingabe- und/oder Anzeigegeräten oder mit sonstigen Steuerungs- oder Überwachungseinrichtungen verbunden sein. Ferner ist es auch möglich, dass die erste Sender-/Empfänger-Einheit selbst Teil einer solchen Einrichtung ist. Die erste Sender-/Empfänger-Einheit kann ferner mit einem Netzwerk der Fahrzeugwanne verbunden sein. Die erste Konvertierungseinheit kann als einzelnes Element in der Fahrzeugwanne angeordnet sein, sie kann jedoch auch als Einheit mit der ersten Sender-/Empfänger-Einheit angeordnet oder in dieser implementiert sein. Die Sender-/Empfänger-Einheiten können als Datenverarbeitungsgeräte, als Kommunikationsgeräte, als Switch und/oder als netzwerkfähige Geräte ausgestaltet sein.

Die Leiterbahnen des Schleifrings sind über eine bestimmte Anzahl von zweiten Verbindungsleitern mit einer zweiten Konvertierungseinheit verbunden, wobei die Anzahl der zweiten Verbindungsleiter und die Anzahl der ersten Verbindungsleiter insbesondere gleich ist. Durch die gleiche Anzahl an Verbindungsleitern an beiden Seiten des Schleifrings können die Signale auf beiden Seiten des Schleifrings im Wesentlichen identisch sein. Die zweiten Verbindungsleiter können über auf den Leiterbahnen des Schleifrings gleitende Schleifbürsten mit den Leiterbahnen des Schleifrings verbunden sein und die ersten Verbindungsleiter können insbesondere direkt mit den Leiterbahnen des Schleifrings verbunden sein. Ferner ist es jedoch auch möglich, dass die ersten Verbindungsleiter über auf den Leiterbahnen gleitende Schleifbürsten mit den Leiterbahnen des Schleifrings verbunden sind und die zweiten Verbindungsleiter insbesondere direkt mit den Leiterbahnen des Schleifrings verbunden sind. Die Anzahl der Verbindungsleiter kann gleich der Anzahl der Leiterbahnen des Schleifrings sein. Es ist jedoch auch möglich, dass die Anzahl der Verbindungsleiter geringer ist als die Anzahl der Leiterbahnen des Schleifrings, so dass die verbleibenden Leiterbahnen des Schleifrings anderweitig genutzt, beispielsweise für die Übertragung von elektrischer Energie, oder auch ungenutzt bleiben können.

Die Signale von der zweiten Konvertierungseinheit sind derart konvertierbar, dass diese über eine bestimmte Anzahl von zweiten Zuleitern leitbar sind, wobei die Anzahl der zweiten Zuleiter größer ist als die Anzahl der zweiten Verbindungsleiter. Die zweite Konvertierungseinheit kann baugleich zur ersten Konvertierungseinheit sein. Es ist jedoch auch möglich, dass beide Konvertierungseinheiten unterschiedlich ausgestaltet sind. Beide Konvertierungseinheiten können derart ausgestaltet sein, dass diese die Signale sowohl konvertieren als auch zurückkonvertieren können. Die zurückkonvertierten Signale können dabei im Wesentlichen den Ausgangssignalen entsprechen. Die zweite Konvertierungseinheit kann im Turm des Fahrzeugs angeordnet sein. Sie kann als einzelnes Element oder auch als Einheit mit der zweiten Sender-/Empfänger-Einheit angeordnet oder in dieser implementiert sein. Die Konvertierungseinheiten können in Netzwerke implementiert oder an diese angeschlossen sein. Beispielsweise ist es möglich, dass die erste Konvertierungseinheit an ein Wannennetzwerk und die zweite Konvertierungseinheit an ein Turmnetzwerk angeschlossen oder in diese implementiert ist.

Die zweite Konvertierungseinheit ist über die zweiten Zuleiter mit der zweiten Sender-/Empfänger-Einheit verbunden. Die Anzahl an zweiten Zuleitern kann gleich der Anzahl an ersten Zuleitern sein, wobei auch insbesondere die Signale in den ersten Zuleitern und in den zweiten Zuleitern gleich sein können. Die Signale können jedoch auch unterschiedlich sein, wobei die wesentlichen Informationen nach Konvertierung und Rückkonvertierung erhalten bleiben. Die zweite Sender-/Empfänger-Einheit kann im Turm des Fahrzeugs angeordnet sein und mit Waffen, Optiken, Sensoren, Kommunikationseinrichtungen oder anderen Geräten verbunden sein. Die zweite Sender-/Empfänger-Einheit kann über Netzwerkverbindungen mit den Geräten verbunden und in ein im Turm implementiertes Netzwerk eingebunden sein.

In konstruktiver Hinsicht wird vorgeschlagen, dass die Zuleiter zu einer vieladrigen Verbindung mit mehr als zwei Adern, insbesondere zu einem vier- oder acht-adrigen Kabel, zusammengefasst sind. Durch das Zusammenfassen der Zuleiter können die Sender-/Empfänger-Einheiten auch auf einfache Weise mit den Konvertierungseinheiten beispielsweise durch ein einziges Kabel verbunden sein. Dieses Kabel kann ein Netzwerkkabel, ein Ethernetkabel oder ein sonstiges Kabel zur Übertragung von Signalen sein. Es ist weiterhin auch möglich, dass Verbindungen eine andere Anzahl von Adern aufweisen. Die Anzahl von Adern kann abhängig von den Signalen oder abhängig davon sein, auf welche Weise die Signale geleitet werden.

Im Hinblick auf die Verbindungsleiter hat es sich als vorteilhaft herausgestellt, wenn diese zu einer zwei-adrigen Verbindung insbesondere zu einem zwei-adrigen Kabel zusammengefasst sind. Die Verbindung kann ferner als Kupferdrahtverbindung ausgestaltet sein, wobei die beiden Drähte zu einer Twisted-Pair-Verbindung verdrillt sein können. Die Konvertierungseinheiten und die Leiterbahnen des Schleifrings können jeweils mit einem einzigen Kabel verbunden sein, wobei eines der Kabel mittels Schleifbürsten mit den Leiterbahnen des Schleifrings verbunden sein kann. Die Verbindungsleiter können das Wannennetzwerk und das Turmnetzwerk über den Schleifring miteinander verbinden.

Es ist ferner möglich, dass die Netzwerke eine Bus-Topologie aufweisen, so dass zusätzliche Geräte auf einfache Weise im Netzwerk integriert werden können. Durch die Verbindung der Netzwerke über den Schleifring können solche Nachrüstgeräte auch mit den entsprechend anderen Netzwerk kommunizieren.

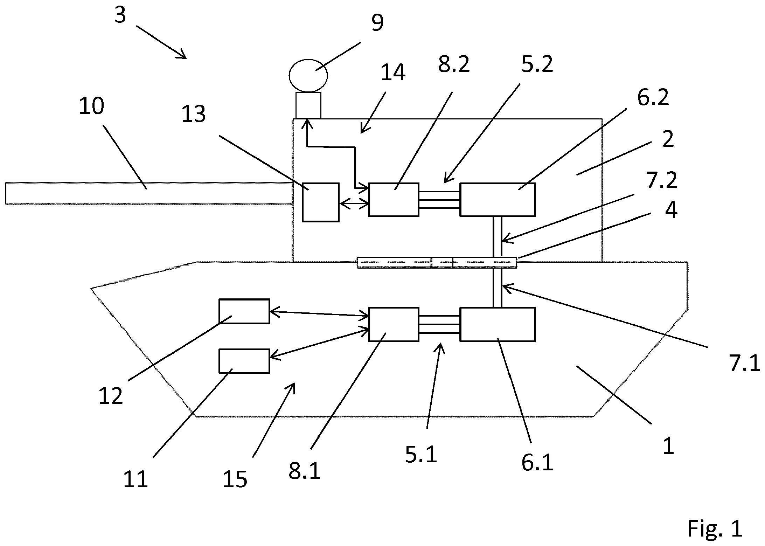

Weitere Vorteile der Erfindung sollen anhand der nachfolgenden Zeichnung beschrieben werden. Darin zeigt
- Fig. 1: eine schematische Seitenansicht eines militärischen Fahrzeugs mit einer Vorrichtung zur Signalübertragung.

In Fig. 1 ist ein als Panzer ausgebildetes militärisches Fahrzeug 3 mit einer Fahrzeugwanne 1 und einem drehbar auf der Fahrzeugwanne 1 gelagerten Turm 2 dargestellt, wobei der Turm 2 als Panzerturm mit einer Waffe 10 ausgebildet ist. Der Fahrer des Fahrzeugs befindet sich in der Fahrzeugwanne 1, Richt- und Ladungsschütze sind im Turm 2 untergebracht.

Bei der am Turm 2 angeordneten Optik 9 handelt es sich um ein Gerät, welches nachgerüstet wurde und bei der Fertigung des Fahrzeugs 3 nicht vorgesehen war. Die Fahrzeugwanne 1 und Turm 2 weisen jeweils eine Kommunikationseinheit 11, 13 auf, die als Sprechanlange ausgebildet ist.

Die Fahrzeugwanne 1 und der Turm 2 sind über einen Schleifring 4 miteinander verbunden, wobei der Schleifring 4 nur über eine begrenzte Anzahl an Leiterbahnen verfügt, über welche Signale übertragen werden können. Demnach ist es nicht möglich, dass die Signale der Optik 9 auf separaten Leiterbahnen des Schleifrings 4 auch zur Fahrzeugwanne 1 zu transportiert werden.

Anhand der beispielhaften Darstellung in der Fig. 1 soll nun nachfolgend erläutert werden, wie die Signale der Optik 9 und die Signale der Kommunikationseinrichtungen 11, 13 erfindungsgemäß über den Schleifring übertragen werden.

Die in der Fahrzeugwanne 1 angeordnete Anzeige 11 und die Kommunikationseinheit 12 sind an ein Wannennetzwerk 15 angeschlossen. Die als Switch ausgebildete erste Sender-/Empfänger-Einheit 8.1 ist ebenfalls in das Wannennetzwerk 15 des Fahrzeugs 3 eingebunden und daher über entsprechende Netzwerkverbindungen sowohl mit der Anzeige 11 als auch mit der Kommunikationseinheit 12 verbunden. Im Turm 2 des Fahrzeugs 3 ist eine zweite Sender-/Empfänger-Einheit 8.2 angeordnet, die in ein Turmnetzwerk 14 implementiert ist, mit welchem auch die Optik 9 und die Kommunikationseinheit 13 verbunden sind.

Zur Übertragung von Signalen zwischen der Fahrzeugwanne 1 und dem Turm 2 sind die entsprechenden Netzwerke 14, 15 über einen zwischen der Fahrzeugwanne 1 und dem Turm 2 angeordneten Schleifring 4 verbunden. Im hier dargestellten Beispiel weist der Schleifring 4 nur zwei freie Leiterbahnen zur Übertragung von Signalen auf, so dass die beiden Netzwerke 14, 15, welche 8-adrige Ethernetverbindungen verwenden, nicht über den Schleifring 4 miteinander verbunden werden können.

Um trotzdem eine Verbindung zwischen Turm- und Wannennetzwerk 14, 15 herzustellen, sind in der Fahrzeugwanne 1 und in dem Turm 2 jeweils Konvertierungseinheiten 6.1, 6.2 angeordnet. Die erste Konvertierungseinheit 6.1 ist im Wannennetzwerk 15 integriert und über die als Netzwerkkabel ausgestalteten ersten Zuleiter 5.1 mit der ersten Sender-/Empfänger-Einheit 8.1 verbunden. Die erste Konvertierungseinheit 6.1 ist in der Lage die Signale derart zu konvertieren, dass diese nur über zwei Leiterbahnen des Schleifrings 4 geleitet werden können. Dafür ist diese über die als zweiadrige Kupferleiter ausgebildeten ersten Verbindungsleiter 7.1 mit dem Schleifring 4 verbunden.

Auch der Turm 2 weist eine Konvertierungseinheit 6.2 auf die mittels zweiten Zuleitern 5.2 mit der zweiten Sender-/Empfänger-Einheit 8.2 verbunden und somit im Turmnetzwerk 14 eingebunden ist. Zudem ist die zweite Konvertierungseinheit 6.1 über zweite Verbindungsleiter 7.2 auch mit dem Schleifring 4 verbunden. Beide Konvertierungseinheiten 6.1, 6.2 sind in der Lage die Netzwerksignale derart zu konvertieren, dass diese über die zweiadrigen Verbindungsleiter 7.1, 7.2 geleitet werden können und demnach auch nur zwei Leiterbahnen des Schleifrings 4 für die Übertragung benötigt werden. Ebenso können beide Konvertierungseinheiten 6.1, 6.2 die entsprechenden Signale auch wieder zurückkonvertieren und in das entsprechend andere Netzwerk einspeisen.

Die Kommunikationssignale der Kommunikationseinheiten 12, 13 bzw. die Bildsignale der Optik 9 werden in die entsprechenden Netzwerke 14, 15 eingespeist und können dann mittels der Konvertierungseinheiten 6.1, 6.2 konvertiert und zum entsprechend anderen Netzwerk 14, 15 transportiert werden. So können die von der Optik 9 aufgenommenen Bilder von dieser in Bildsignale umgewandelt und ins Turmnetzwerk 14 eingespeist werden. Über die zweite Sender-/Empfänger-Einheit 8.2 werden die Signale dann zur zweiten Konvertierungseinheit 6.2 und anschließend über den Schleifring 4 geleitet. In der Fahrzeugwanne 1 werden die Signale mittels der ersten Konvertierungseinheit 6.1 wieder zurückkonvertiert und über die erste Sender-/Empfänger-Einheit 8.1 ins Wannennetzwerk 15 eingespeist, so dass diese auf der Anzeige 11 dargestellt werden können.

Durch dieses erfindungsgemäße Verfahren wird es daher ermöglicht, bestehende Fahrzeuge 3, die nur eine begrenzte Anzahl an Leiterbahnen am Schleifring 4 aufweisen, mit Geräten nachzurüsten. Denn diese müssen lediglich in das entsprechende Netzwerk 14, 15 implementiert werden und können dann bereits auch mit dem entsprechend anderen Netzwerk 14, 15 und mit den entsprechend darin implementierten Geräten kommunizieren.

### Bezugszeichen:

- 1: Fahrzeugwanne
- 2: Turm
- 3: Fahrzeug
- 4: Schleifring
- 5.1: erste Zuleiter
- 5.2: zweite Zuleiter
- 6.1: erste Konvertierungseinheit
- 6.2: zweite Konvertierungseinheit
- 7.1: erste Verbindungsleiter
- 7.2: zweite Verbindungsleiter
- 8.1: erste Sender-/Empfänger-Einheit
- 8.2: zweite Sender-/Empfänger-Einheit
- 9: Optik
- 10: Waffe
- 11: Anzeige
- 12: Kommunikationseinrichtung
- 13: Kommunikationseinrichtung
- 14: Turmnetzwerk
- 15: Wannennetzwerk

## Patentansprüche

1. Verfahren zur Signalübertragung zwischen mindestens zwei Sender/- Empfänger-Einheiten (8.1, 8.2) in einem militärischen Fahrzeug über eine vorgegebene Anzahl Leiterbahnen eines Schleifrings (4), der zwischen einer Fahrzeugwanne (1) und einem drehbar mit der Fahrzeugwanne (1) verbundenen Turm (2) angeordnet ist, **gekennzeichnet durch** die folgenden Schritte:
a) Signale werden von der ersten Sender-/Empfänger-Einheit (8.1) über eine bestimmte Anzahl von ersten Zuleitern (5.1) zu einer ersten Konvertierungseinheit (6.1) zur Konvertierung der Signale geleitet;
b) die erste Konvertierungseinheit (6.1) konvertiert die Signale derart, dass diese über eine bestimmte Anzahl von ersten Verbindungsleitern (7.1) geleitet werden können, wobei die Anzahl der ersten Verbindungsleiter (7.1) geringer ist als die Anzahl der ersten Zuleiter (5.1);
c) die Signale werden von der ersten Konvertierungseinheit (6.1) über die ersten Verbindungsleiter (7.1) zu den Leiterbahnen des Schleifrings (4) geleitet;
d) die Signale von den Leiterbahnen des Schleifrings (4) werden über eine bestimmte Anzahl von zweiten Verbindungsleitern (7.2) zu einer zweiten Konvertierungseinheit (6.2) geleitet;
e) die zweite Konvertierungseinheit (6.2) konvertiert die Signale derart, dass diese über eine bestimmte Anzahl von zweiten Zuleitern (5.2) leitbar sind, wobei die Anzahl der zweiten Zuleiter (5.2) größer ist als die Anzahl der zweiten Verbindungsleiter (7.2);
f) die Signale werden von der zweiten Konvertierungseinheit (6.2) über die zweiten Zuleiter (5.2) zu der zweiten Sender-/Empfänger-Einheit (8.2) geleitet.

2. Militärisches Fahrzeug mit einer Fahrzeugwanne (1), einem Turm (2), mindestens zwei Sender-/Empfänger-Einheiten (8.1, 8.2) und einer Vorrichtung zur Signalübertragung zwischen den zwei Sender-/Empfänger-Einheiten (8.1, 8.2) über eine vorgegebene Anzahl von Leiterbahnen eines Schleifrings (4), der zwischen der Fahrzeugwanne (1) und dem drehbar mit der Fahrzeugwanne (1) verbundenen Turm (2) angeordnet ist,
**gekennzeichnet durch** folgende Merkmale:
a) die erste Sender-/Empfänger-Einheit (8.1) ist über eine bestimmte Anzahl von ersten Zuleitern (5.1) mit einer ersten Konvertierungseinheit (6.1) zur Konvertierung der Signale verbunden;
b) mittels der ersten Konvertierungseinheit (6.1) sind die Signale derart konvertierbar, dass diese über eine bestimmte Anzahl von ersten Verbindungsleitern (7.1) leitbar sind, wobei die Anzahl von ersten Verbindungsleitern (7.1) geringer ist als die Anzahl von ersten Zuleitern (5.1);
c) die erste Konvertierungseinheit (6.1) ist über die ersten Verbindungsleiter (7.1) mit den Leiterbahnen des Schleifrings (4) verbunden;
d) die Leiterbahnen des Schleifrings (4) sind über eine bestimmte Anzahl von zweiten Verbindungsleitern (2) mit einer zweiten Konvertierungseinheit (6.2) verbunden;
e) die Signale von der zweiten Konvertierungseinheit (6.2) sind derart konvertierbar, dass diese über eine bestimmte Anzahl von zweiten Zuleitern (5.2) leitbar sind, wobei die Anzahl der zweiten Zuleiter (5.2) größer ist als die Anzahl der zweiten Verbindungsleiter (7.2); f) die zweite Konvertierungseinheit (6.2) ist über die zweiten Zuleiter (5.2) mit der zweiten Sender-/Empfänger-Einheit (8.2) verbunden.

3. Vorrichtung nach Anspruch 2, **dadurch gekennzeichnet, dass** die Zuleiter (5.1, 5.2) zu einer vieladrigen Verbindung mit mehr als zwei Adern, insbesondere zu einem 4- oder 8-adrigen Kabel, zusammengefasst sind.

4. Vorrichtung nach einem der Ansprüche 2 bis 3, **dadurch gekennzeichnet, dass** die Verbindungsleiter (7.1, 7.2) zu einer zweiadrigen Verbindung, insbesondere zu einem 2-adrigen Kabel, zusammengefasst sind.

## Claims

1. Method for signal transmission between at least two transceiver units (8.1, 8.2) in a military vehicle via a prescribed number of interconnects of a slip ring (4) arranged between a vehicle hull (1) and a turret (2) rotatably connected to the vehicle hull (1),
**characterized by** the following steps:
a) signals are routed from the first transceiver unit (8.1) via a particular number of first feed conductors (5.1) to a first conversion unit (6.1) for the purpose of converting the signals;
b) the first conversion unit (6.1) converts the signals such that they can be routed via a particular number of first connecting conductors (7.1), the number of first connecting conductors (7.1) being smaller than the number of first feed conductors (5.1);
c) the signals are routed from the first conversion unit (6.1) via the first connecting conductors (7.1) to the interconnects of the slip ring (4);
d) the signals from the interconnects of the slip ring (4) are routed via a particular number of second connecting conductors (7.2) to a second conversion unit (6.2);
e) the second conversion unit (6.2) converts the signals such that they are routable via a particular number of second feed conductors (5.2), the number of second feed conductors (5.2) being larger than the number of second connecting conductors (7.2);
f) the signals are routed from the second conversion unit (6.2) via the second feed conductors (5.2) to the second transceiver unit (8.2).

2. Military vehicle having a vehicle hull (1), a turret (2), at least two transceiver units (8.1, 8.2) and an apparatus for signal transmission between the two transceiver units (8.1, 8.2) via a prescribed number of interconnects of a slip ring (4) arranged between the vehicle hull (1) and the turret (2) rotatably connected to the vehicle hull (1),
**characterized by** the following features:
a) the first transceiver unit (8.1) is connected via a particular number of first feed conductors (5.1) to a first conversion unit (6.1) for the purpose of converting the signals;
b) the first conversion unit (6.1) can be used to convert the signals such that they are routable via a particular number of first connecting conductors (7.1), the number of first connecting conductors (7.1) being smaller than the number of first feed conductors (5.1);
c) the first conversion unit (6.1) is connected via the first connecting conductors (7.1) to the interconnects of the slip ring (4);
d) the interconnects of the slip ring (4) are connected via a particular number of second connecting conductors (2) to a second conversion unit (6.2);
e) the signals from the second conversion unit (6.2) are convertible such that they are routable via a particular number of second feed conductors (5.2), the number of second feed conductors (5.2) being larger than the number of second connecting conductors (7.2);
f) the second conversion unit (6.2) is connected via the second feed conductors (5.2) to the second transceiver unit (8.2).

3. Apparatus according to Claim 2, **characterized in that** the feed conductors (5.1, 5.2) are combined to form a multicore connection having more than two cores, in particular to form a 4- or 8-core cable.

4. Apparatus according to either of Claims 2 and 3, **characterized in that** the connecting conductors (7.1, 7.2) are combined to form a two-core connection, in particular to form a 2-core cable.

## Revendications

1. Procédé pour la transmission de signaux entre au moins deux unités d'émission/réception (8.1, 8.2) dans un véhicule militaire via un nombre prescrit de pistes conductrices d'une bague collectrice (4), laquelle est disposée entre un carter de véhicule (1) et une tour (2) reliée de manière rotative au carter de véhicule (1),
**caractérisé par** les étapes suivantes :
a) des signaux sont conduits par la première unité d'émission/réception (8.1) via un nombre défini de premiers conducteurs d'amenée (5.1) vers une première unité de conversion (6.1) pour la conversion des signaux ;
b) la première unité de conversion (6.1) convertit les signaux de telle sorte que ceux-ci peuvent être conduits via un nombre défini de premiers conducteurs de liaison (7.1), dans lequel le nombre de premiers conducteurs de liaison (7.1) est inférieur au nombre de premiers conducteurs d'amenée (5.1) ;
c) les signaux sont conduits de la première unité de conversion (6.1) via les premiers conducteurs de liaison (7.1) vers les pistes conductrices de la bague collectrice (4) ;
d) les signaux des pistes conductrices de la bague collectrice (4) sont conduits via un nombre défini de deuxièmes conducteurs de liaison (7.2) vers une deuxième unité de conversion (6.2) ;
e) la deuxième unité de conversion (6.2) convertit les signaux de telle sorte que ceux-ci peuvent être conduits via un nombre défini de deuxièmes conducteurs d'amenée (5.2), dans lequel le nombre de deuxièmes conducteurs d'amenée (5.2) est supérieur au nombre de deuxièmes conducteurs de liaison (7.2) ;
f) les signaux sont conduits de la deuxième unité de conversion (6.2) via les deuxièmes conducteurs d'amenée (5.2) vers la deuxième unité d'émission/réception (8.2).

2. Véhicule militaire avec un carter de véhicule (1), une tour (2), au moins deux unités d'émission/réception (8.1, 8.2) et un dispositif pour la transmission de signaux entre les deux unités d'émission/réception (8.1, 8.2) via un nombre prescrit de pistes conductrices d'une bague collectrice (4), laquelle est disposée entre le carter de véhicule (1) et la tour (2) reliée de manière rotative au carter de véhicule (1),
**caractérisé par** les caractéristiques suivantes :
a) la première unité d'émission/réception (8.1) est reliée via un nombre défini de premiers conducteurs d'amenée (5.1) à une première unité de conversion (6.1) pour la conversion des signaux ;
b) les signaux peuvent être convertis au moyen de la première unité de conversion (6.1) de telle sorte que ceux-ci peuvent être conduits via un nombre défini de premiers conducteurs de liaison (7.1), dans lequel le nombre de premiers conducteurs de liaison (7.1) est inférieur au nombre de premiers conducteurs d'amenée (5.1) ;
c) la première unité de conversion (6.1) est reliée via les premiers conducteurs de liaison (7.1) aux pistes conductrices de la bague collectrice (4) ;
d) les pistes conductrices de la bague collectrice (4) sont reliées via un nombre défini de deuxièmes conducteurs de liaison (2) à une deuxième unité de conversion (6.2) ;
e) les signaux de la deuxième unité de conversion (6.2) peuvent être convertis de telle sorte que ceux-ci peuvent être conduits via un nombre défini de deuxièmes conducteurs d'amenée (5.2), dans lequel le nombre de deuxièmes conducteurs d'amenée (5.2) est supérieur au nombre de deuxièmes conducteurs de liaison (7.2) ;
f) la deuxième unité de conversion (6.2) est reliée via les deuxièmes conducteurs d'amenée (5.2) à la deuxième unité d'émission/réception (8.2).

3. Dispositif selon la revendication 2, **caractérisé en ce que** les conducteurs d'amenée (5.1, 5.2) sont rassemblés en une liaison multiconducteurs avec plus de deux conducteurs, en particulier en un câble à 4 ou 8 conducteurs.

4. Dispositif selon l'une des revendications 2 à 3, **caractérisé en ce que** les conducteurs de liaison (7.1, 7.2) sont rassemblés en une liaison à deux conducteurs, en particulier en un câble à 2 conducteurs.
